# FASCICULE DE BREVET EUROPEEN

(11) **EP 1 483 341 B1**
(45) Date de publication et mention de la délivrance du brevet: **07.05.2008**
(21) Numéro de dépôt: 03727584.9
(22) Date de dépôt: 12.03.2003
(51) Int. Cl.: C09D 5/00, C09D 7/12, C09J 153/00, C09D 153/00

(54) **UTILISATION DE COPOLYMERES A BLOCS PORTANT DES FONCTIONS PHOSPHONATES COMME PROMOTEURS D'ADHESION OU COMME AGENTS DE PROTECTION CONTRE LA CORROSION D'UNE SURFACE METALLIQUE**
VERWENDUNG VON BLOCKCOPOLYMEREN MIT PHOSPHONATENGRUPPEN ALS HAFTVERMITTLER ODER ALS KORROSIONSSCHUTZMITTEL FÜR METALLOBERFLÄCHE
USE OF BLOCK COPOLYMERS BEARING PHOSPHONATE FUNCTIONS AS ADHESION PROMOTERS OR AS PROTECTING AGENTS AGAINST THE CORROSION OF A METALLIC SURFACE

(30) Priorité: 13.03.2002 FR 0203111
(43) Date de publication de la demande: 08.12.2004
(73) Titulaire: RHODIA CHIMIE, 92512 Boulogne Billancourt Cedex (FR)
(72) Inventeur: DESTARAC, Mathias, F-75005 PARIS (FR); BONNET-GONNET, Cécile, F-75004 PARIS (FR); CADIX, Arnaud, F-75017 PARIS (FR)
(74) Mandataire: Delenne, Marc
(86) Numéro de dépôt international: PCT/FR2003/000788
(87) Numéro de publication internationale: WO 2003/076529

(56) Documents cités:
- EP-A- 1 156 089
- DE-A- 10 029 694
- US-B1- 6 174 953

## Description

La présente invention concerne l'utilisation d'un copolymère à blocs, dont au moins un bloc comporte des fonctions phosphonates, pour réaliser sur une surface métallique telle qu'une surface d'acier ou d'aluminium, un dépôt notamment utilisable pour améliorer l'efficacité de l'application ultérieure d'une composition filmogène sur la surface ainsi modifiée ou pour protéger ladite surface métallique contre la corrosion.

L'invention concerne plus particulièrement un procédé d'application de compositions de peintures ou de mastics sur une surface métallique, mettant à profit ce type d'utilisation, ainsi que les matériaux métalliques revêtus susceptibles d'être obtenus selon un tel procédé d'application.

Par surface métallique au sens de l'invention, on entend les surfaces de matériaux à base de métaux ou de semi-métaux.

Par métaux, on entend dans la présente invention, toute substance qui se distingue des substances non métalliques par une forte conductivité pour l'électricité et la chaleur, cette conductivité décroissant avec une élévation de température, et par leur forte réflectivité vis à vis de la lumière qui leur donne un éclat métallique caractéristique.

On peut citer à titre d'exemple de métaux ou de semi-métaux les éléments de la classification périodique des éléments listé dans le tableau de la page 227 du document intitulé « Encyclopaedia Britannica », volume 15, 1966 incorporé par référence.

On peut citer notamment les éléments de la classification périodique des éléments choisis dans le groupe des alcalins ou alcalino-terreux, des métaux de transition, de l'Aluminium, du Gallium, de l'Indium, du Talium, du Silicium, du Germanium, de l'Etain, du Plomb, de l'Arsenic, de l'Antimoine, du Bismuth, du Tellure, du Polonium ou de l'Astate, ainsi que leurs oxydes ou leurs alliages.

On peut citer à titre de liste préférée de matériaux métalliques l'aluminium, le duralumin, le zinc, l'étain, le cuivre, les alliages du cuivre tels que le bronze ou le laiton, le fer, l'acier éventuellement inoxydable ou galvanisé, l'argent, ou le vermeil.

Lorsqu'on applique directement sur la surface d'un de ces matériaux métalliques une composition filmogène de type peinture ou mastic siliconé ou non, on observe d'une manière générale, un mauvais ancrage de la composition filmogène sur la surface métallique, ce qui conduit à l'obtention d'un revêtement de qualité médiocre.

Par ailleurs on peut également observer, dans le cas de matériaux contenant du fer tel que l'acier, une corrosion éclair provoquée par l'application directe sur la surface métallique d'une composition filmogène de type peinture ou mastic siliconé ou non, en particulier lorsqu'il s'agit d'une composition aqueuse, qui altère considérablement la qualité et la durabilité de ces revêtements.

En outre, dans le cas de matériaux en aluminium, se présente un problème supplémentaire, qui est la très faible mouillabilité de la surface aluminium qui rend impossible l'application directe d'une composition filmogène de type peinture ou mastic siliconé ou non sur la surface d'un matériau en aluminium,
ou bien conduit, dans le meilleur des cas, à l'obtention d'un revêtement de qualité médiocre.

De plus, les propriétés d'adhésion des revêtements ainsi obtenus se dégradent en présence d'humidité ou de contact avec l'eau de ces surfaces, notamment en raison de phénomènes de diffusion de l'eau à l'interface.

Le besoin existait d'améliorer les propriétés d'adhésion sur les surfaces métalliques.

Or, la Demanderesse a découvert que certains copolymères à blocs dont au moins un bloc comporte des fonctions phosphonates peuvent être utilisés pour réaliser, sur des surfaces métalliques, des dépôts présentant une affinité forte vis-à-vis de ces surfaces et qui en modifient les propriétés, notamment en augmentant leur capacité d'ancrage et/ou en augmentant leur mouillabilité et/ou en leur conférant un caractère plus hydrophile ou plus hydrophobe, et/ou en assurant une protection contre la corrosion.

Les modifications induites par la présence d'un dépôt à base de ces polymères à blocs permettent de palier aux problèmes rencontrés jusque là et il est possible d'obtenir une amélioration de l'efficacité de l'application d'une composition filmogène de type peinture ou mastic, mais également une amélioration de l'adhésion sur le support de cette composition filmogène effective et durable, même en présence d'eau.

Cette amélioration de l'adhésion du revêtement se traduit par un effet décoratif, protecteur ou fonctionnel prolongé, avantageusement pendant toute la durée de vie du produit, sans que l'effet induit par le revêtement réalisé ne soit susceptible d'être remis en cause par un lavage avec une solution aqueuse (S) de pH compris entre 1 et 12, comprenant éventuellement du chlorure de sodium, à raison d'une concentration maximale de 10M, un pelage ou une désagrégation dudit revêtement, notamment sous l'effet de contraintes mécaniques.

De façon plus générale, le dépôt à base des copolymères à blocs de l'invention possède le plus souvent une affinité telle vis à vis de la surface métallique que la solidarisation de ce dépôt sur la surface traitée reste assurée pour des humidités relatives allant de 0 à 100%. Avantageusement, cette solidarisation reste assurée en présence d'eau, voire sous immersion dans l'eau.

De par la modification des propriétés de surface qu'ils induisent, et compte tenu de leur tenue à l'eau, les dépôts à base des copolymères à blocs réalisés selon l'invention peuvent être mis en oeuvre dans de nombreux domaines d'application.

Ainsi l'invention propose un procédé d'application d'une composition filmogène (F) sur une surface métallique, comprenant les étapes suivantes:
(A) on applique sur ladite surface une formulation contenant un copolymère à blocs dont au moins un bloc comprend des fonctions phosphonates et éventuellement un solvant tel qu'un solvant organique, de l'eau ou un mélange eau-alcool, de façon à former sur ladite surface un dépôt sous la forme d'une couche continue: et
(B) on élimine au moins partiellement le solvant du dépôt obtenu à l'étape (A) :et
(C) on applique sur la surface ainsi modifiée obtenue à l'étape (B) ladite composition filmogène (F).

L'utilisation d'un copolymère à blocs dont au moins un bloc comprend des fonctions phosphonates, ledit copolymère étant éventuellement mis en solution dans un solvant tel qu'un solvant organique, de l'eau ou un mélange eau-alcool, permet de réaliser sur une surface métallique un dépôt augmentant l'affinité de ladite surface vis à vis de l'eau.

Par "augmentation de l'affinité d'une surface métallique vis-à-vis de l'eau", on entend une augmentation de la mouillabilité de ladite surface par l'eau et les solutions aqueuses. Cette augmentation de l'affinité pour l'eau s'accompagne le plus souvent, de façon plus générale, d'une augmentation de la mouillabilité par des solvants polaires autre que l'eau tels que le glycérol.

Cette augmentation de la mouillabilité suite au dépôt du copolymère à blocs de l'invention est mise en évidence en mesurant, dans les mêmes conditions de température et d'humidité relative, l'angle de contact présenté par une goutte d'eau déposée sur la surface, avant et après le dépôt dudit copolymère.

L'augmentation de la mouillabilité de la surface observée suite au dépôt du copolymère à blocs sur la surface se traduit par une diminution de l'angle de contact mesuré par rapport à l'angle mesuré avant ce dépôt.

Ainsi, dans des conditions d'humidité relatives de à 0 à 100% et à des température de 15 à 35°C, le dépôt d'un copolymère à blocs selon l'invention permet par exemple, pour une surface de type aluminium, de passer d'un angle de contact d'une goutte d'eau de 93° à un angle de 51°.

Le copolymère à blocs de l'invention peut avantageusement être mis en oeuvre pour conférer un caractère hydrophile à une surface présentant initialement une nature hydrophobe. Par surface de nature "hydrophobe", on entend, au sens de l'invention, une surface caractérisée par un angle de contact d'une goutte d'eau supérieure ou égale à 45° et généralement supérieure à 70°. Le terme "hydrophile" est quant à lui employé pour désigner une surface caractérisée par un angle de contact d'une goutte d'eau inférieure à 45°, de préférence inférieure ou égale à 30°.

Ainsi, le copolymère à blocs de l'invention peut avantageusement être mis en oeuvre pour conférer un caractère hydrophile à une surface présentant initialement une nature hydrophobe, comme par exemple certaines surfaces à base d'aluminium (angle de contact avec une goutte d'eau ~90°), de durai (angle de contact avec une goutte d'eau ~70°)ou de d'acier galvanisé (angle de contact avec une goutte d'eau ~80°).

Ainsi, l'utilisation d'un copolymère à blocs dont au moins un bloc comprend des fonctions phosphonates, ledit copolymère étant éventuellement mis en solution dans un solvant tel qu'un solvant organique, de l'eau ou un mélange eau-alcool, permet de rendre compatible une surface à caractère hydrophobe avec son environnement à caractère hydrophile.

L'utilisation d'un copolymère à blocs dont au moins un bloc comprend des fonctions phosphonates, ledit copolymère étant éventuellement mis en solution dans un solvant tel qu'un solvant organique, de l'eau ou un mélange eau-alcool, permet de réaliser, sur une surface métallique, un dépôt protégeant ladite surface métallique contre la corrosion.

Le dépôt à base du copolymère à blocs réalisé selon l'invention peut être effectué en appliquant, sur la surface métallique une solution comprenant ledit copolymère à blocs, ou bien en immergeant la surface à traiter dans une solution à base du copolymère à blocs, puis en éliminant ensuite au moins partiellement, et de préférence pour l'essentiel, le solvant initialement contenu dans cette solution, par exemple par séchage.

Par élimination partielle, on entend une élimination d'au moins 70% en masse du solvant initialement présent, de préférence d'au moins 80% en masse, et encore plus avantageusement d'au moins 90% en masse.

Une élimination du solvant "pour l'essentiel" correspond quant à elle à une élimination d'au moins 95% en masse du solvant initialement présent, de préférence d'au moins 97% en masse, et encore plus avantageusement d'au moins 99% en masse.

La solution à base du copolymère à blocs de l'étape (A) est de préférence une solution aqueuse ou hydro-alcoolique (par exemple dans un mélange eau/éthanol) dans le cas où la composition filmogène (F) est une composition aqueuse.

La solution à base du copolymère à blocs de l'étape (A) est de préférence une solution en solvant organique dans le cas où la composition filmogène (F) est une composition en un solvant organique.

La composition filmogène (F) peut également être à base de polyuréthanne ou de mastic anhydre.

Cette solution utilisée quel que soit le solvant utilisé a une concentration en copolymère à blocs comprise, dans le cas le plus général, entre 0,01 et 50% en masse. De façon à obtenir un mouillage optimal du support et à éviter l'apparition d'hétérogénéités au sein du dépôt réalisé, on préfère utiliser une solution à une concentration comprise entre 0,05 et 10% en masse, et de manière encore plus préférentielle entre 0,1 et 5% en masse.

De telles teneurs confèrent à la formulation une viscosité adaptée à une application sur la surface métallique. De plus, ces teneurs mènent à l'obtention d'un film continu (sans apparition de zones de démouillage) lorsqu'on les applique à l'aide d'un tire film sur des surfaces planes, ou, de façon plus générale, lorsqu'on immerge la surface à traiter dans ladite solution.

En outre, ces concentrations sont particulièrement bien adaptées pour réaliser, par un simple séchage, une élimination partielle ou totale du solvant organique, ou du solvant aqueux ou hydro-alcoolique présent dans le dépôt réalisé dans l'étape (A), élimination recommandée pour observer une amélioration effective de l'application de la composition (F) lors de l'étape (C).

Le séchage de l'étape (B) est effectué par exemple à une température comprise entre 15°C et 50°C (de préférence entre 19 et 25°C), et dans des conditions d'humidité comprises entre 10% et 70%, et de préférence entre 50% et 60%.

Dans le cas où le dépôt de l'étape (A) est réalisé à l'aide d'un tire-film, le film obtenu possède une épaisseur comprise entre 1 et 100 microns, et de façon avantageuse entre 10 et 70 microns. Ainsi, l'épaisseur du film déposé peut de façon encore plus avantageuse être de l'ordre de 20 microns.

Après le séchage de l'étape (B) on obtient un dépôt à base de polymère se présentant sous la forme d'une couche primaire continue d'accrochage d'épaisseur comprise entre 10 nm et 1 µm, avantageusement entre 40 et 600nm, et de préférence entre 50 et 500 nm.

Par "composition filmogène", au sens de l'invention, on entend toute composition sous la forme d'une dispersion ou d'une solution, généralement sous la forme d'une dispersion où la phase dispersée présente avantageusement une taille comprise entre 10Å à 100µm, et comprenant :
- à titre de phase continue ou de solvant, un solvant organique ou de l'eau, éventuellement en association avec d'autres composés solubles; et
- des composés de type polymères ou précurseur de polymères, de résine acrylique ou de silicones, qui sont susceptibles de conduire à la formation d'un film polymère, d'un film acrylique ou d'un film silicone suite à l'application de la composition sur une surface et à l'évaporation au moins partielle du solvant organique ou de l'eau, et éventuellement des autres composés solubles.

Ainsi les compositions filmogènes de l'invention peuvent par exemple être des compositions aqueuses comprenant une dispersion aqueuse ou hydro-alcoolique de polymères carbonés sous la forme d'un latex ou d'une formulation, de type adhésif, mastic ou peinture par exemple, comprenant un tel latex, ou de précurseurs de silicones et notamment une composition de mastic du type de celles décrites dans le documents EP 665 862, WO 98/13410 ou WO 99/65973.

Les compositions de l'invention peuvent être également des compositions comprenant une dispersion de polymères carbonés sous la forme d'un latex ou d'une formulation, de type adhésif, mastic ou peinture dans un solvant organique.

Lors de l'application des copolymères à blocs de l'invention sur une surface métallique, le ou les blocs d'ancrage fonctionnalisés par les fonctions phosphonates créent des liaisons chimiques avec les atomes de la surface métallique. Ces réactions chimiques ont lieu sur les sites susceptibles d'être corrodés et induisent de ce fait une protection de la surface métallique.

Les blocs distincts du bloc d'ancrage du copolymère à bloc permettent d'ajuster l'état de la surface métallique à l'application souhaitée, en particulier d'augmenter les interactions entre la composition (F) et la surface, donc l'énergie d'adhésion.

Ces blocs peuvent comprendre en outre une ou plusieurs fonctions chimiques susceptibles de créer des liens chimiques durables avec le polymère contenu dans la composition filmogène (F).

On peut citer à titre d'exemple de fonctions chimiques les fonctions hydroxy, epoxy, carboxy, amino ou isocyanates, qui sont susceptibles d'agir dans une étape de réticulation.

Les copolymères à blocs de la présente invention présentent au moins un bloc comprenant des fonctions phosphonates.

Ce bloc, appelé bloc d'ancrage, peut être un homopolymère à base de monomère comprenant des fonctions phosphonates.

Le bloc d'ancrage peut également être un polymère statistique à base d'un monomère comprenant l'une ou l'autre de ces fonctions phosphonates ou leurs mélanges dans une quantité comprise entre 0,1 et 100% en poids desdits monomères par rapport au poids total du bloc d'ancrage. De préférence cette quantité desdits monomères est comprise entre 0,5% et 50% en poids desdits monomères par rapport au poids total du bloc d'ancrage. De manière encore plus préférentielle, cette quantité est comprise entre 2% et 20% en poids desdits monomères par rapport au poids total du bloc d'ancrage.

Le monomère comprenant des phosphonates peut être choisi par exemple parmi:
- les dérivés N-methacrylamidomethylphosphonic acid esters, en particulier l'ester n-propylique (RN 31857-11-1), l'ester méthylique (RN 31857-12-2), l'ester éthylique (RN 31857-13-3), rester n-butytique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7),
- les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2),
- les dérivés N-acrylamiclomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4),
- les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1),
- le diéthyl 2-(4-vinylphenyl)ethanephosphonate (RN 61737-88-0).
- les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid
- l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle).

Les monomères à fonction mono ou diacide phosphonique peuvent être utilisés sous forme neutralisée, partiellement ou totalement, éventuellement par une amine, par exemple la dicyclohexylamine.

La proportion en masse du bloc d'ancrage par rapport au poids total du copolymère à bloc de la présente invention varie entre 90 :10 et 10 : 90.

Les autres monomères du bloc d'ancrage qui entrent en jeu dans le cadre de la présente invention peuvent être des monomères ayant un caractère hydrophile (h) ou hydrophobe (H).

Parmi les monomères ayant un caractère hydrophile (h) on peut citer :
- les acides mono- et di-carboxyliques insaturés éthyléniques tels que l'acide acrylique, l'acide méthacrylique, l'acide itaconique, l'acide maléique, ou l'acide furnarique,
- les mono-alkylesters des acides di-carboxyliques insaturés éthyléniques ci-dessus, de préférence avec des alcools en C₁-C₄, ainsi que leurs dérivés N-substitués, tels que par exemple l'acrylate ou le méthacrylate de 2-hydroxyéthyle,
- les amides des acides carboxyliques insaturés, comme l'acrylamide, le méthacrylamide, ou
- les monomères éthyléniques comprenant un groupe uréido tels que l'éthylène urée ethyl méthacrylamide, ou l'éthylène urée ethyl méthacrylate,
ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-suifoéthylène-méthacrylate, ou
- les monomères cationiques choisis parmi les (méth)acrylates d'aminoalkyle, les (méth)acrytamides d'aminoalkyle ; les monomères comprenant au moins une fonction amine secondaire, tertiaire ou quaternaire, ou un groupe hétérocyclique contenant un atome d'azote, la vinylamine, l'éthylène imine ; les sels d'ammonium de diallyldialkyl; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyl (méth)acrylate, diméthyl amino propyl (méth)acrylate le ditertiobutyl aminoéthyl (méth)acrylate, le diméthyl amino méthyl (méth)acrylamide, le dimétliyl amino propyl (méth)acrylamide; l'éthylène iminé, la vinylamine, la 2-viriylpyridine, la 4-vinylpyridine ; le chlorure de triméthytammonium éthyl (méth)acrylate, le méthyl sulfate de triméthylammonium éthyl acrylate, le chlorure de benzyl diméthylammonium éthyl (méth)acrylate, le chlorure de 4-benzoylbenzyl diméthyl ammonium éthyl acrylate, le chlorure de triméthyl ammonium éthyl (méth)acrylamido, le chlorure de triméthyl ammonium de vinylbenzyle; le chlorure d'ammonium de diallyldiméthyl seuls ou en mélanges, ou leurs sels correspondants, ou
- l'alcoolpolyvinylique résultant de l'hydrolyse d'un polyacétate de vinyle par exemple, ou
- les amides cycliques de la vinylamine, tel que le n-viriyfpyrralidone, ou
- un monomère hydrophile provenant d'une modification chimique d'un bloc hydrophobe par exemple par hydrolyse d'un polyacrylate d'alkyle en polyacide acrylique.

De préférence, les unités monomères hydrophiles (h) sont choisies parmi l'acide acrylique (AA), l'acide 2-acrylamido-2-méthyl-propanesulfonique (AMPS), le sulfonate de styrène (SS), la N-vinylpyrrolidone, des monomères comprenant des groupement uréido, ou leurs mélanges.

De manière encore plus préférentielle on utilise des unités d'acide acrylique (AA) ou des monomères éthyléniques comprenant des groupements uréido.

Parmi les monomères ayant un caractère hydrophobe (H) on peut citer :
- les monomères dérivés styréniques tels que le styrène, l'alphaméthylstyrène, le paraméthytstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionate de vinyle,
- les halogénures de vinyle, par exemple le chlorure de vinyle, et
- les monomères diéniques, par exemple le butadiène ou l'isoprène.

De préférence, les unités monomères hydrophobes (H) du copolymère à blocs mis en oeuvre dans la réalisation du dépôt de l'invention sont des esters d'acide acryliques avec des alcools linéaires ou ramifiés en C1-C8, et en particulier en C1-C4, comme, par exemple, l'acrylate de méthyle, l'acrylate d'éthyle, l'acrylate de propyle, l'acrylate de butyle ou l'acrylate de 2-éthylhexyle, ou bien des dérivés styréniques tels que le styrène.

Les autres blocs du copolymère à blocs mis en oeuvre dans la réalisation du dépôt de l'invention peuvent être des homopolymères d'un monomère choisi parmi la liste de monomères (h) ou (H).

Les autres blocs du copolymère à blocs mis en oeuvre dans la réalisation du dépôt de l'invention peuvent être également des polymères statistiques d'au moins deux monomères choisis parmi la liste de monomères (h) ou (H).

Les copolymères à blocs de l'invention peuvent aussi être des copolymères triblocs.

A titre de copolymères à blocs particulièrement avantageux dans le cadre de l'invention, on peut notamment citer les copolymères diblocs dans lequel le premier bloc est un copolymère statistique à base d'acide acrylique et d'acide vinyl phosphorique contenait au moins 5%, de préférence 10%, et de manière encore plus préférentielle 20% en poids d'acide vinyl phosphorique par rapport au poids total du bloc, et le deuxième bloc est un bloc poly(acrylate de butyle), et en particulier les copolymères diblocs poly(acide acrylique-stat-acide vinylphosphonique)-poly(acrylate de butyle), dits PABu-P(AA-VPA).

Ces copolymères PABu-P(AA-VPA) sont caractérisés par un rapport massique (acide acrylique)/(acrylate de butyle) qui peut être compris entre 10 : 90 et 90 : 10, et de préférence ce rapport est compris entre 10 : 90 et 50 : 50.

D'autres copolymères à blocs particulièrement avantageux dans le cadre de l'invention sont par exemple les copolymères à blocs comprenant un bloc de copolymère statistique à base d'acide acrylique et d'acide vinyl phosphonique contenant au moins 5%, de préférence 10%, et de manière encore plus préférentielle 20% en poids d'acide vinyl phosphonique par rapport au poids total du bloc, et un second bloc d'acrylamide. Ces copolymères sont caractérisés par un rapport massique (bloc acide acrylique-stat-acide vinylphosphonique)/(bloc acrylamide) qui peut être compris entre 10 : 90 et 90 : 10, et de préférence ce rapport est compris entre 10 : 90 et 50 : 50.

En général les copolymères à blocs utilisés dans l'invention présentent une masse moléculaire en nombre comprise entre 1 000 et 100 000. Le plus souvent, leur masse moléculaire en nombre est comprise entre 2 000 et 60 000.

Quelle que soit sa composition chimique exacte, le copolymère à blocs mis en oeuvre dans la réalisation du dépôt de l'invention peut avantageusement être préparé selon un procédé de polymérisation radicalaire contrôlée, réalisée en présence d'un agent de contrôle.

Par "polymérisation radicalaire contrôlée", on entend un procédé de polymérisation radicalaire spécifique, également désigné par le terme de "polymérisation vivante", dans lequel on met en oeuvre des agent de contrôle tels que les chaînes polymères en formation sont fonctionnalisées par des groupements terminaux susceptibles de pouvoir être réactivés sous forme de radicaux libres grâce à des réactions de terminaison et/ou de transfert réversibles.

A titre d'exemple de tels procédés de polymérisation, on peut notamment citer :
- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 97/01478
- le procédé de la demande WO 99/03894 qui met en oeuvre une polymérisation en présence de précurseurs nitroxydes,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiophosphoroesters de la demande PCT/FR 01/02374.
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127. 991 (1975), Daikin Kogyo Co Itd Japan et Matyjaszewski et al., Macromolecules, 28, 2093 (1995),
- le procédé de polymérisation radicalaire contrôlée par les dérivés du tetraphényléthane, divulgué par D. Braun et al. dans Macromol. Symp. 111,63 (1996), ou encore
- le procédé de polymérisation radicalaire contrôlée par des complexes organocobalt décrit par Wayland et al. dans J.Am.Chem.Soc. 116,7973 (1994).

De façon générale, on préfère que les copolymères à blocs mis en oeuvre selon l'invention soient issus d'un procédé de polymérisation radicalaire contrôlée mettant en oeuvre, à titre d'agent de contrôle, un ou plusieurs composés choisis parmi les dithioesters, les thioethers-thiones, les dithiocarbamates, et les xanthates. De façon particulièrement avantageuse, les copolymères à blocs utilisés selon l'invention sont issus d'une polymérisation radicalaire contrôlée réalisée en présence d'agents de contrôle de type xanthates.

Selon un mode de mise en oeuvre préféré, le copolymère à blocs utilisé peut être obtenu selon un des procédés des demandes WO 98/58974, WO 00/75207 ou WO 01/42312 qui mettent en oeuvre une polymérisation radicalaire contrôlée par des agents de contrôle de type xanthates, ladite polymérisation pouvant être mise en oeuvre notamment en masse, en solvant, ou, de préférence en émulsion aqueuse, de façon à obtenir directement le copolymère sous forme d'une solution aqueuse ou hydro-alcoolique, ou aisément applicable à une teneur comprise entre 0,01 et 50% en masse. Une solution du copolymère à une teneur comprise entre 0,01 et 50% en poids obtenue directement par un procédé de polymérisation dans le même solvant organique est également utilisable.

Ainsi, on peut mettre en oeuvre un procédé comprenant les étapes suivantes :
(a) on réalise une polymérisation radicalaire contrôlée menant à l'obtention d'un polymère fonctionnalisé utile à titre d'agent de contrôle dans une réaction de polymérisation radicalaire contrôlée, ladite étape étant conduite en mettant en contact :
   - des molécules monomères éthyléniquement insaturées,
   - une source de radicaux libres, et
   - au moins un agent de contrôle de formule (I): 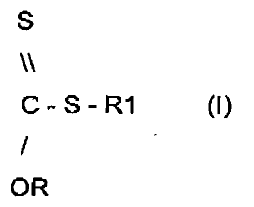
   dans laquelle:
   - R représente :
      - H ou Cl;
      - un groupe alkyle, aryle, alcényle ou alcynyle ;
      - un cycle carboné, saturé ou non, éventuellement aromatique ;
      - un hétérocycle, saturé ou non éventuellement aromatique ;
      - un groupe alkylthio,
      - un groupe alkoxycarbonyle, aryloxycarbonyle, carboxy, acyloxy, ou carbamoyle ;
      - un groupe cyano, dialkyl- ou diaryl-phosphonato, dialkyl- ou diaryl- phosphinato ;
      - une chaîne polymène,
      - un groupe (R2)O-, (R2)(R'2)N-, dans lesquels les radicaux R2 et R'2, identiques ou différents, représentent chacun :
         - un groupe alkyle, acyle, aryle, alcényle ou alcynyle ;
         - un cycle carboné, saturé ou non, éventuellement aromatique ; ou
         - un hétérocycle, saturé ou non, éventuellement aromatique ;
      et
   - R1 représente:
      - un groupe alkyle, acyle, aryle, alcényle ou alcynyle,
      - un cycle carboné, saturé ou non, éventuellement aromatique:
      - un hétérocycle, saturé ou non, éventuellement aromatique; ou
      - une chaîne polymère,
(b) on réalise, suite à l'étape (a), une étape de polymérisation radicalaire contrôlée, ou plusieurs étapes successives de polymérisations radicalaires contrôlées, ladite ou lesdites étape(s) consistant chacune à effectuer une polymérisation radicalaire contrôlée menant à l'obtention d'un copolymère à blocs fonctionnalisé utile à titre d'agent de contrôle dans une réaction de polymérisation radicalaire contrôlée, ladite ou lesdites étapes étant conduite(s) en mettant en contact :
   - des molécules monomères éthyléniquement insaturées différentes de celles mis en oeuvre dans l'étape précédente,
   - une source de radicaux libres, et
   - le polymère fonctionnalisé issu de l'étape précédente.

Il est entendu que l'une des étapes de polymérisation (a) et (b) définies ci-dessus conduit à la formation du bloc d'ancrage, c'est à dire du bloc comprenant les fonctions phosphonates, et qu'une autre des étapes de polymérisation des étapes (a) et (b) conduit à la formation d'un autre bloc. Il est en particulier à noter que les monomères éthyléniquement insaturés mis en oeuvre dans les étapes (a) et (b) sont choisis parmi les monomères adaptés pour obtenir un copolymère à blocs tel que défini précédemment.

De façon générale, les étapes de polymérisation (a) et (b) sont mises en oeuvre dans un milieu solvant constitué d'eau et/ou d'un solvant organique tel que le tetrahydrofuranne ou un alcool aliphatique en C1-C8, linéaire, cyclique ou ramifié tel que le méthanol, l'éthanol, ou le cyclohexanol, ou encore un diol tel que l'éthyièneglycol.

Un solvant alcoolique est plus particulièrement recommandé dans le cadre de la mise en oeuvre de monomères hydrophiles du type de l'acide acrylique (AA), de l'acrylamide (AM), de l'acide 2-acrylamido-2-méthylpropanesulfonique (AMPS), et du sulfonate de styrène (SS) et/ou dans le cadre de la mise en oeuvre de monomères hydrophobes tels que l'acrylate de n-butyle, l'acrylate d'isobutyle, l'acrylate de 2-éthylhexyle, ou l'acrylate de t-butyle.

Selon un dernier aspect, la présente invention concerne également le matériau susceptible d'être obtenu par le procédé décrit ci-dessus.

De façon générale, les matériaux obtenus par la mise en oeuvre de ce procédé sont tels qu'ils présentent une cohésion forte entre la surface et le revêtement réalisé.

En règle générale, l'affinité du revêtement pour la surface métallique est telle que la force de pelage à 90° de ce dépôt à une vitesse de pelage de 20mm/mn, mesurable par exemple à l'aide d'un dynamomètre de type Adamel-Lhomagry DY-30, est généralement supérieure ou égale à 0,5 N/mm, avantageusement supérieure à 1 N/mm, voire à 2 N/mm. Dans certains cas la force de pelage peut même être supérieure à 3 N/mm.

Cette forte affinité du revêtement pour le support se traduit naturellement par une très bonne stabilité du revêtement sur la surface.

En outre, l'adhésion du revêtement sur la surface n'est pas remise en cause en présence d'eau.

Ainsi, même lorsque le matériau est maintenu pendant une durée de 72 heures dans des conditions d'humidité relatives de 100%, la force pelage à 90° du dépôt reste généralement supérieure à 0,5 N/mm, et il n'est pas rare qu'elle reste supérieure à 1 N/mm, voire à 2 N/mm à une vitesse de pelage de 20 mm/mn.

Dans le cas des surfaces peintes, la stabilité du dépôt peut également être mise en évidence par un test de résistance à l'abrasion humide, selon la norme DYN 53778, consistant à frotter le revêtement obtenu avec une brosse de dureté et de poids normalisés sous un goutte à goutte d'eau additivée de tensioactif qui entretient le mouillage de la surface, et à mesurer le nombre de cycle de brossage nécessaire pour retirer le revêtement sur toute son épaisseur de façon à découvrir le support.

Dans le cas des surfaces peintes, la stabilité du dépôt peut également être mise en évidence par un test de quadrillage, selon la norme ISO 2409 de novembre 1994 « Peintures et vernis - essai de quadrillage », consistant à évaluer la résistance d'un revêtement à être séparé de son support métallique lorsqu'on y pratique des incisions jusqu'au support à l'aide d'un cutter sous forme d'un quadrillage et qu'on tente d'arracher un ruban adhésif transparent normalisé sensible à la pression préalablement collé sur le revêtement.

Dans le cas des surfaces peintes, la stabilité du dépôt peut également être mise en évidence par un test d'emboutissage, selon la norme ISO 1520 de juin 1995 « Peintures et vernis - essai d'emboutissage », consistant à évaluer la résistance d'une couche de peinture, vernis ou produit assimilé aux craquelures et/ou au décollement d'une surface métallique, lorsqu'elle est soumise à une déformation graduelle par emboutissage dans des conditions normalisées.

Dans le cas des surfaces peintes, la stabilité du dépôt peut également être mise en évidence par un test de chute d'une masse, selon la norme ISO 6272 de juin 1993 « Peintures et vernis - Essai de chute d'une masse », consistant à évaluer la résistance d'un revêtement au craquelage ou au décollement de son support métallique lorsqu'il est soumis à une déformation provoquée par une masse tombante, lâchée dans des conditions normalisées.

L'intérêt de la mise en oeuvre des copolymères de l'invention ressort clairement de la mise en oeuvre de tels tests, où on constate que la tenue d'un revêtement adhésif est largement accrue en présence de ces copolymères à blocs.

L'objet et les avantages de la présente invention apparaîtront de façon encore plus évidente au vu des différents exemples de mise en oeuvre exposés ci-après.

### Exemple 1 : Synthèse d'un copolymère dibloc à base d'acrylamide, d'acide acrylique et d'acide vinyl phosphonique, noté PAm-block-P(AA-stat-VPA)

### Premier bloc

Dans un ballon en verre de 500 ml, on introduit 50 g d'une solution d'acrylamide à 50% dans l'eau, 75 g d'eau, 4 g d'acétone, 117 mg d'acide 4,4-azo-bis-4-cyanovalerique (ACV)et 174 mg de *O*-ethyl-*S*-(1-methoxycarbonyl)ethylenyl) xanthate (CH₃CHCO₂CH₃)S(C=S)OEt. Le milieu réactionnel est porté à 70°C pendant 5 heures.

Un échantillon est ensuite prélevé et analysé. Une analyse en chromatographie HPLC révèle l'absence d'acrylamide résiduel. Par chromatographie d'exclusion stérique (CES) dans l'eau étalonnée par des étalons linéaires de polyoxyde d'ethylène, la masse molaire moyenne en nombre est mesurée : Mₙ=24000 g/mol, M_{w}/Mₙ=1.89.

### Second bloc

Au polymère en solution issu de la première étape sont ajoutés 1,32 g d'acide vinyl phosphonique et 70 mg d'ACV. Le mélange est porté à 70°C et une solution de 7,14 g d'acide acrylique dans 34,7 g d'eau est additionnée pendant 8 heures. Pendant cette introduction, 70 mg d'ACV sont introduits après 4 heures. Ce même ajout est renouvelé après 8 heures. La réaction est maintenue à cette température pendant 5 heures après la fin de l'introduction de la solution de monomère.

Un échantillon est prélevé puis analysé. La conversion en acide acrylique est totale (HPLC) . La conversion en acide vinyl phosphonique est de 50% (determiné par RMN 31 P).

Le copolymère à blocs issu de ce procédé a été purifié par dialyse (seuil de coupure de la membrane: 1000 Daltons). Après 3 jours de dialyse, le copolymère est totalement purifié de son monomère résiduel (RMN 31 P). Par CES dans l'eau, on mesure Mₙ=33300 g/mol, M_{w}/Mₙ=1.74. Le caractère contrôlée de la réaction est conforté par une réponse intense du polymère par CES à détection UV à une longueur d'onde de 290 nm, caractéristique du groupement xanthate en bout de chaine du copolymère.

### Exemple 2 : Synthèse d'un copolymère dibloc à base d'acrylate de butyle, d'acide acrylique et d'acide vinyl phosphonique, noté PABu-block-P(AA-stat-VPA).

### Premier bloc

Dans un ballon en verre de 250 ml, on introduit 20 g d'acrylate de butyle, 32,6 g d'acétone, 219 mg d'azobiisobutyronitrile (AIBN) et 1,39 g de *O*-ethyl-*S*-(1-methoxycarbonyl)ethylenyl) xanthate (CH₃CHCO₂CH₃)S(C=S)OEt. Le milieu réactionnel est porté à 70°C pendant 5 heures. 109 mg d'AIBN sont rajoutés 2 heures après le début de la réaction.
Un échantillon est ensuite prélevé et analysé. Par CES étalonnée par des étalons linéaires de polystyrène, la masse molaire moyenne en nombre est mesurée : Mₙ=2800 g/mol, M_{w}/Mₙ=1.91.

### Second bloc

Au polymère en solution issu de la première étape sont ajoutés 10,58 g d'acide vinyl phosphonique et 219 mg d' AIBN. Le mélange est porté à 70°C et une solution de 57,14 g d'acide acrylique dans 100,9 g d'eau est additionnée pendant 8 heures. Pendant cette introduction, une solution de 328 mg d' AIBN dans 2 g d'acétone est ajoutée après 4 heures. Ce même ajout est renouvelé après 8 heures. La réaction est maintenue à cette température pendant 5 heures après la fin de l'introduction de la solution de monomère.
Un échantillon est prélevé puis analysé. La conversion en acide acrylique est totale (HPLC) . La conversion en acide vinyl phosphonique est de 73% (determiné par RMN 31P).
Le copolymère à blocs issu de ce procédé a été purifié par dialyse (seuil de coupure de la membrane : 1000 Daltons). Après 7 jours de dialyse, le copolymère est totalement purifié de son monomère résiduel (RMN 31 P). Le copolymère à blocs une fois purifié se présente comme une dispersion stable dans l'eau.

### Exemple 3 : Synthèse d'un copolymère dibloc à base d'acrylate de butyle, d'acide acrylique et d'acide vinyl phosphonique, noté PABu-block-P(AA-stat-VPA)

### Premier bloc

Dans un ballon en verre de 250 ml, on introduit 20 g d'acrylate de butyle, 32,6 g d'acétone, 219 mg d'azobiisobutyronitrile (AIBN) et 1,39 g de *O*-ethyl-*S*-(1-methoxycarbonyl)ethylenyl) xanthate (CH₃CHCO₂CH₃)S(C=S)OEt. Le milieu réactionnel est porté à 70°C pendant 5 heures. 109 mg d'AIBN sont rajoutés 2 heures après le début de la réaction.

Un échantillon est ensuite prélevé et analysé. Par CES étalonnée par des étalons linéaires de polystyrène, la masse molaire moyenne en nombre est mesurée : Mₙ=2800 g/mol, M_{w}/Mₙ=1.91.

### Second bloc

Au polymère en solution issu de la première étape sont ajoutés 3,18 g d'acide vinyl phosphonique et 219 mg d' AIBN. Le mélange est porté à 70°C et une solution de 17,14 g d'acide acrylique dans 29,79 g d'eau est additionnée pendant 3 heures. Pendant cette introduction, une solution de 328 mg d' AIBN dans 2 g d'acétone est ajoutée après 3 heures. Ce même ajout est renouvelé après 5 heures. La réaction est maintenue à cette température pendant 5 heures après la fin de l'introduction de la solution de monomère.

Un échantillon est prélevé puis analysé. La conversion en acide acrylique est totale (HPLC). La conversion en acide vinyl phosphonique est de 52% (determiné par RMN 31P).

Le copolymère à blocs issu de ce procédé a été purifié par dialyse (seuil de coupure de la membrane: 1000 Daltons). Après 7 jours de dialyse, le copolymère est totalement purifié de son monomère résiduel (RMN 31 P). Le copolymère à blocs une fois purifié se présente comme une dispersion stable dans l'eau.

### Exemple 4: Utilisation de copolymères diblocs poly(acrylate de butyle)-b-poly(acide acrylique-co-acide vinylphosphonique) et poly(acrylamide)-b-poly(acide acrylique-co-acide vinyl phosphonique) selon l'invention pour modifier la mouillabilité d'un support métallique

Les copolymère diblocs PABu-b-P(AA-VPA) ainsi que PAm-b-P(AA-VPA) obtenus dans les sont exemples 1,2 et 3 mis en oeuvre pour modifier la mouillabilité de surfaces métalliques. Les surfaces métalliques utilisées pour ces essais sont des surfaces standards fournies par Q PANEL soit l'acier type R46 et l'aluminium type A-36 utilisés sans préparation supplémentaire.

Le traitement de surface est réalisé par trempage des surfaces à traiter dans des solutions aqueuses à 0,1% en masse de copolymère à blocs pendant une nuit dans deux conditions différentes de pH i.e. soit le pH naturel de la solution de polymère après synthèse (pH ≈ 3) soit ajusté par de la soude jusqu'à obtention d'un pH de 8,5. La présence de polymère à la surface est caractérisée par des mesures d'angle de contact d'une goutte d'eau. Ces mesures sont réalisées grâce à un tensiomètre ITC de type SDT200.

**Tableau I : angles de contact sur un substrat aluminium traité par une solution de polymère PAm-P(AA-VPA) : 30K-10K**

| | Angle (°) |
|---|---|
| Sans traitement | 93 |
| PAm-P(AA-VPA) : 30K-10K à pH = 2.5 | 51 |
| PAm-P(AA-VPA) : 30K-10K à pH = 8.5 | 53 |

**Tableau II : angles de contact sur un substrat aluminium traité par une solution de polymère PAm-P(AA-VPA) : 30K-10K, puis lavé pendant 24h à l'eau épurée**

| | Angle (°) |
|---|---|
| Sans traitement | 93 |
| PAm-P(AA-VPA) : 301<-1 0K à pH = 2.5 | 50 |
| PAm-P(AA-VPA) : 30K-10K à pH = 8.5 | 59 |

Dans le cas de l'aluminium, relativement hydrophobe sans traitement préalable, il est possible d'hydrophiliser sa surface de façon significative (cf. tableau I) et durable (cf. tableau II). En effet, par un traitement par un polymère de PAm-b-P(AA-VPA), à pH acide ou basique, l'angle de contact diminue significativement de 90 à 50° environ.

La durabilité de ce traitement est mise en évidence par un lavage des échantillons dans l'eau épurée pendant 24h. En l'occurrence, les angles de contact après lavage sont sensiblement identiques à ceux mesurés directement après traitement (cf. tableau II).

**Tableau III : essais sur un substrat acier traité à pH = 8,5**

| | Angle (°) |
|---|---|
| Sans traitement | 62 |
| PAm-P(AA-VPA) : 30K-10K | 11 |
| PABu-P(AA-VPA) : 3K-10K | 64 |
| PABu-P(AA-VPA) : 3K-3K | 79 |

Sur un substrat acier, relativement hydrophile il est possible de moduler sa mouillabilité au moyen d'un polymère amphiphile. Ainsi, en fonction de la HLB du polymère utilisé, on peut soit hydrophiliser (avec le PAm-P(AA-VPA) : 30K-10K), soit hydrophober ( avec le PABu-P(AA-VPA) : 3K-3K) la surface (cf. tableau III).

### Exemple 5 : Utilisation de copolymères diblocs poly(acrylate de butyle)-b-poly(acide acrylique-co-acide vinylphosphonique) et poly(acrylamide)-b-poly(acide acrylique-co-acide vinyl phosphonique) selon l'invention pour améliorer l'efficacité du dépôt d'un latex sur un support métallique

Les copolymère diblocs PABu-b-P(AA-VPA), ainsi que PAm-b-P(AA-VPA) obtenus dans les sont mis en oeuvre pour réaliser le dépôt d'une couche primaire d'adhésion sur différents supports plans en acier et aluminium. Le traitement de surface est réalisé par trempage des surfaces à traiter dans des solutions aqueuses à 0,1 % en masse de copolymère à blocs.

Un dépôt de latex est effectué ultérieurement sur les surfaces ainsi traitées afin d'évaluer les propriétés d'adhésion du film obtenu après séchage. A titre comparatif, un film de latex est réalisé sur une surface témoin non traitée.

Le latex utilisé dans le cadre des différents essais réalisés dans cet exemple est un latex acrylique induistriel utilisé notamment en peinture décorative, commercialisé par Rhodia sous la référence DS 1003.

II s'agit d'une dispersion aqueuse de particules de copolymères styrène/acrylate de butyle dont le diamètre moyen est de 0,15 microns et caractérisé par une teneur en polymères de 50% en masse.

Les surfaces métalliques utilisées pour ces essais sont des surfaces standards fournies par Q PANEL soit l'acier type R46 et l'aluminium type A-36 utilisés sans préparation supplémentaire.

Les échantillons subissent un vieillissement de 7 jours avant les mesures de forces de pelage. Le stockage et les essais sont réalisés dans une pièce conditionnée à 22°C (+/- 3°C) et dans des conditions d'humidité relative de 55% (+/- 5%).

A l'exception des surfaces témoins, les surfaces sont trempées dans des solutions aqueuses à 0,1% en masse de copolymère à blocs pendant une nuit dans deux conditions différentes de pH i.e. soit le pH naturel de la solution de polymère après synthèse (pH ≈ 3) soit ajusté par de la soude jusqu'à obtention d'un pH de 8,5.

Après traitement, l'excès de solution est épongé et un film de latex est réalisé à l'aide d'un tire-film, de façon à réaliser un film de latex de 1mm d'épaisseur (avant séchage), que l'on recouvre immédiatement par un tissu de soie permettant de réaliser un test de pelage à 90° du revêtement.

On place ensuite les échantillons pendant 7 jours, dans une pièce conditionnée à 22°C (+/- 3°C) et dans des conditions d'humidité relative de 55% (+/- 5%).

Un test de pelage à 90° du revêtement est ensuite réalisé. II consiste à tirer une bande de revêtement perpendiculairement à la surface du support jusqu'à désolidarisation du revêtement et de la surface.

La force moyenne nécessaire pour réaliser cette séparation est mesurée à l'aide d'un dynamomètre Adamel-Lhomagry de type DY-30 avec un capteur de 100 N maximum.

A l'issu de ce test, la force est rapportée à la largeur de la bande d'adhésif pelé pour finalement exprimer la force de pelage par unité de largeur (Fₚ) en N/mm.

Les résultats obtenus avec une vitesse de pelage de 20mm/mn sont regroupés dans les tableaux I à III ci-après.

**Tableau I : essais de pelage sur un substrat aluminium à pH = 8,5**

| | Fₚ(N/mm) |
|---|---|
| témoin | 1.5 |
| PAm-P(AA-VPA) : 30K-10K | 1.8 |
| PABu-P(AA-VPA):3K-10K | 1.2 |
| PABu-P(AA-VPA):3K-3K | 1.1 |

**Tableau II: essais de pelage sur un substrat aluminium à pH = 2,5**

| | Fₚ(N/mm) |
|---|---|
| témoin | 1.5 |
| PAm-P(AA-VPA): 30K-10K | 2.7 |
| PABu-P(AA-VPA): 3K-10K | 2.4 |
| PABu-P(AA-VPA): 3K-3K | 2.3 |

Sur substrat aluminium, l'adhésion est améliorée, en particulier avec le PAm-P(AA-VPA) : 30K-10K à pH basique, et avec les trois polymères des exemples 1, 2 et 3 à pH acide (cf. tableaux I et II).

**Tableau III : essais de pelage sur un substrat acier**

| | Fₚ(N/mm) |
|---|---|
| témoin | 2.5 |
| PAm-P(AA-VPA): 30K-10K à pH = 8.5 | 2.5 |
| PAm-P(AA-VPA) : 30K-10K à pH = 2.5 | 4.0 |

Sur substrat acier, l'adhésion est améliorée avec un traitement par le polymère PAm-P(AA-VPA) : 30K-10K en particulier à pH acide (cf. tableau III). A titre indicatif, sur l'acier traité par de l'acide phosphorique (fourni par Q panel sous la référence R46i), considéré comme un promoteur d'adhésion et un agent anticorrosion, la force de pelage dans les mêmes conditions est de 3.3 N/mm.

## Revendications

1. Procédé d'application d'une composition filmogène (F) sur une surface métallique, comprenant les étapes suivantes :
(A) on applique sur ladite surface une formulation contenant un copolymère à blocs dont au moins un bloc comprend des fonctions phosphonates et éventuellement un solvant tel qu'un solvant organique, de l'eau ou un mélange eau-alcool, de façon à former sur ladite surface un dépôt sous la forme d'une couche continue; et
(B) on élimine au moins partiellement le solvant du dépôt obtenu à l'étape (A) ;et
(C) on applique sur la surface ainsi modifiée obtenue à l'étape (B) ladite composition filmogène (F).

2. Procédé selon la revendication précédente, **caractérisé en ce que** la surface métallique est une surface à base d'un élément choisi dans le groupe des alcalins ou alcalino-terreux, des métaux de transition, de l'Aluminium, du Gallium, de l'Indium, du Talium, du Silicium, du Germanium, de l'Etain, du Plomb, de l'Arsenic, de l'Antimoine, du Bismuth, du Tellure, du Polonium ou de l'Astate, ainsi que leurs oxydes ou leurs alliages.

3. Procédé selon l'une quelconque des revendications précédentes, **caractérisé en ce que** la surface métallique est une surface à base d'aluminium, de duralumin, de zinc, d'étain, de cuivre, des alliages du cuivre tels que le bronze ou le laiton, de fer, d'acier éventuellement inoxydable ou galvanisé, d'argent, ou de vermeil ou de leurs mélanges.

4. Procédé selon l'une des revendications précédentes, **caractérisé en ce que** la formulation appliquée sur la surface lors de l'étape (A) contient ledit copolymère à blocs en une teneur comprise entre 0,01 et 50 % en masse, cette teneur étant exprimée par rapport à la masse totale de la formulation.

5. Procédé selon la revendication 4, **caractérisé en ce que** la formulation appliquée sur la surface lors de l'étape (A) contient ledit copolymère à blocs en une teneur comprise entre 0.05 et 10% en masse, cette teneur étant exprimée par rapport à la masse totale de la formulation.

6. Procédé selon la revendication 5, **caractérisé en ce que** la formulation appliquée sur la surface lors de l'étape (A) contient ledit copolymère à blocs en une teneur comprise entre 0,1 et 5% en masse, cette teneur étant exprimée par rapport à la masse totale de la formulation.

7. Procédé selon l'une quelconques des revendications précédentes, **caractérisé en ce que** le dépôt de copolymère à blocs sous la forme d'une couche continue obtenue à l'étape B a une épaisseur comprise entre 10nm et 1µm.

8. Procédé selon la revendication 8, **caractérisé en ce que** le dépôt de copolymère à blocs sous la forme d'une couche continue obtenue à l'étape B a une épaisseur comprise entre 40nm et 600nm.

9. Procédé selon la revendication 7 ou 8, **caractérisé en ce que** le dépôt de copolymère à blocs sous la forme d'une couche continue obtenue à l'étape B a une épaisseur comprise entre 50nm et 500nm.

10. Procédé selon l'une des revendications précédentes, **caractérisé en ce que** le le bloc comprenant des fonctions phosphonates est un homopomymère à base de monomère comprenant des fonctions phosphonates.

11. Procédé selon l'une quelconque des revendications 1 à 9, **caractérisé en ce que** le bloc comprenant des fonctions phosphonates est un polymère statistique à base d'au moins un monomère comprenant comprenant ces fonctions phosphonates dans une quantité desdits monomères comprise entre 0,1 et 100% en poids desdits monomères par rapport au poids total du bloc.

12. Procédé selon la revendication 11, **caractérisé en ce que** la quantité desdits monomères est comprise entre 0,5% et 50% en poids desdits monomères par rapport au poids total du bloc

13. Procédé selon l'un quelconque des revendications 11 ou 12, **caractérisé en ce que** la quantité desdits monomères est comprise entre 2% et 20% en poids desdits monomères par rapport au poids total du bloc.

14. Procédé selon l'un quelconque des revendications 10 à 13, **caractérisé en ce que** la proportion en masse du bloc d'ancrage, comprenant des fonctions phosphonates, par rapport au poids total du copolymère à bloc de la présente invention varie entre 90 :10 et 10 : 90.

15. Procédé selon l'une quelconque des revendications 10 à 14, **caractérisée en ce que** le monomère comprenant des fonctions phosphonates est choisi parmi :
- les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7),
- les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2),
- les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4),
- les dérivés vinylbenzylphnsphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1),
- le diéthyl 2-(4-vinylphenyl)ethanephosphonate (RN 61737-88-0),
- les dérivés dialkylphosphonoalkyl acrylates et méthacrylates, tel le 2-(acryloyloxy)ethylphosphanic acid dimethyl ester (RN 54731-78-1) et le 2-(methacryloyloxy)ethylphosphonic acid dimethyl ester (RN 22432-83-3), le 2-(methacryioy)oxy)methylphosphonic acid diethyl ester (RN 60161-88-8), le 2-(methacryioyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acrytoyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylpihosphonic acid (RN 87243-97-8), le 2-(methacryloyloxy)propylphosphonic acid (RN 252210-30-3), le 2-(acryloyloxy)propylphosplhonic acid (RN 254103-47-4) et le 2-(acryloyloxy)ethylphosphonic acid le vinyl phosphonic acid, éventuellement substitué par des groupements cyano, phényle, ester ou acétate, le vinylidene phosphonic acid, sous forme de sel de sodium ou son ester isopropylique, le vinylphosphonate de bis(2-chloroéthyle).

16. Procédé selon l'une des revendications précédentes, **caractérisée en ce que** le copolymère à blocs mis en oeuvre est obtenu à l'issu d'un procédé de polymérisation radicalaire contrôlée, utilisant de préférence, à titre d'agent de contrôle, un ou plusieurs composés choisis parmi les dithioesters, les thioethers-thiones, les dithiocarbamates, et les xanthates, ladite polymérisation étant mise en oeuvre notamment en masse, en solvant, ou, en émulsion aqueuse, de façon à obtenir directement le copolymère sous forme d'une solution dans un solvant tel qu'un solvant organique, de l'eau ou un mélange eau-alcool.

17. Procédé selon l'une des revendications précédentes, **caractérisé en ce que** la composition (F) est une dispersion aqueuse d'au moins un polymère.

18. Procédé selon l'une des revendications 1 à 16, **caractérisé en ce que** la composition (F) est une solution organique d'au moins un polymère.

19. Procédé selon l'une des revendications précédentes, **caractérisé en ce que** la composition (F) est à base de polyuréthanne ou de mastic anhydre d'au moins un polymère.

20. Procédé selon la revendication 19, **caractérisé en ce que**, dans l'étape (B), la composition aqueuse (F) est appliquée sous la forme d'un film continu sur le dépôt à base du copolymère à blocs.

21. Procédé selon l'une des revendications précédentes **caractérisé en ce que**, suite à l'application de ladite composition (F) de l'étape (C), la surface recouverte par ladite composition (F) est soumise à une étape (D) d'élimination de la phase solvant présente au sein de la composition appliquée.

22. Procédé selon l'une des revendications précédentes, **caractérisé en ce que** la composition (F) est une composition d'adhésif, une composition de peinture, ou une composition de mastic siliconé ou non.

## Claims

1. A process for the application of a film-forming composition (F) to a metal surface, comprising the following stages:
(A) a formulation optionally comprising a solvent, such as an organic solvent, water or a water/alcohol mixture, comprising a block copolymer, at least one block of which comprises phosphonate functional groups, is applied to said surface, so as to form, on said surface, to form on said surface a deposited layer in the form of a continuous coat; and
(B) the solvent is at least partially removed from the deposited layer obtained in stage (A); and
(C) said film-forming composition (F) is applied to the surface, thus modified, obtained in stage (B).

2. The process as claimed in the preceding claim, **characterized in that** the metal surface is a surface based on an element chosen from the group of the alkali metals or alkaline earth metals, the transition metals, aluminum, gallium, indium, thallium, silicon, germanium, tin, lead, arsenic, antimony, bismuth, tellurium, polonium or astatine, and their oxides or their alloys.

3. The process as claimed in any one of the preceding claims, **characterized in that** the metal surface is a surface based on aluminum, duralumin, zinc, tin, copper, copper alloys, such as bronze or brass, iron, steel, optionally stainless or galvanized, silver or vermeil, or on their mixtures.

4. The process as claimed in one of the preceding claims, **characterized in that** the formulation applied to the surface during stage (A) comprises said block copolymer in a content of between 0.01 and 50% by mass, this content being expressed with respect to the total mass of the formulation.

5. The process as claimed in claim 4, **characterized in that** the formulation applied to the surface during stage (A) comprises said block copolymer in a content of between 0.05 and 10% by mass, this content being expressed with respect to the total mass of the formulation.

6. The process as claimed in claim 5 or 26, **characterized in that** the formulation applied to the surface during stage (A) comprises said block copolymer in a content of between 0.1 and 5% by mass, this content being expressed with respect to the total mass of the formulation.

7. The process as claimed in any one of the preceding claims, **characterized in that** the deposited layer of block copolymer in the form of a continuous coat obtained in stage (B) has a thickness of between 10 nm and 1 µm.

8. The process as claimed in claim 8, **characterized in that** the deposited layer of block copolymer in the form of a continuous coat obtained in stage (B) has a thickness of between 40 nm and 600 nm.

9. The process as claimed in claim 7 or 8, **characterized in that** the deposited layer of block copolymer in the form of a continuous coat obtained in stage (B) has a thickness of between 50 nm and 500 nm.

10. The process as claimed in one of the preceding claims, **characterized in that** the block comprising phosphonate functional groups is a homopolymer based on a monomer comprising phosphonate functional groups.

11. The process as claimed in any one of claims 1 to 9, **characterized in that** the block comprising phosphate and/or phosphonate functional groups is a random polymer based on at least one monomer comprising these phosphonate functional groups in an amount of between 0.1 and 100% by weight of said monomers with respect to the total weight of the block.

12. The process as claimed in claim 11, **characterized in that** the amount of said monomers is between 0.5% and 50% by weight of said monomers with respect to the total weight of the block.

13. The process as claimed in either one of claims 11 and 12, **characterized in that** the amount of said monomers is between 2% and 20% by weight of said monomers with respect to the total weight of the block.

14. The process as claimed in any one of claims 10 to 13, **characterized in that** the proportion by mass of the anchoring block, comprising phosphonate functional groups, with respect to the total weight of the block copolymer of the present invention varies between 90:10 and 10:90.

15. The process as claimed in any one of claims 10 to 14, **characterized in that** the monomer comprising phosphonate functional groups is chosen from:
- N-methacrylamidomethylphosphonic acid ester derivatives, in particular the n-propyl ester (RN 31857-11-1), the methyl ester (RN 31857-12-2), the ethyl ester (RN 31857-13-3), the n-butyl ester (RN 31857-14-4) or the isopropyl ester (RN 51239-00-0), and their phosphonic monoacid and diacid derivatives, such as N-methacrylamidomethylphosphonic diacid (RN 109421-20-7),
- N-methacrylamidoethylphosphonic acid ester derivatives, such as N-methacrylamidoethylphosphonic acid dimethyl ester (RN 266356-40-5) or N-methacrylamidoethylphosphonic acid di(2-butyl-3,3-dimethyl) ester (RN 266356-45-0), and their phosphonic monoacid and diacid derivatives, such as N-methacrylamidoethylphosphonic diacid (RN 80730-17-2),
- N-acrylamidomethylphosphonic acid ester derivatives, such as N-acrylamidomethylphosphonic acid dimethyl ester (RN 24610-95-5), N-acrylamidomethylphosphonic acid diethyl ester (RN 24610-96-6) or bis(2-chloropropyl) N-acrylamidomethylphosphonate (RN 50283-36-8), and their phosphonic monoacid and diacid derivatives, such as N-acrylamidomethylphosphonic acid (RN 151752-38-4),
- the vinylbenzylphosphonate dialkyl ester derivatives, in particular the di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) and di(t-butyl) (RN 159358-33-5) ester derivatives, and their phosphonic monoacid and diacid alternative forms, such as vinylbenzylphosphonic diacid (RN 53459-43-1),
- diethyl 2-(4-vinylphenyl)ethanephosphonate (RN 61737-88-0),
- dialkylphosphonoalkyl acrylate and methacrylate derivatives, such as 2-(acryloyloxy)ethylphosphonic acid dimethyl ester (RN 54731-78-1) and 2-(methacryloyloxy)ethylphosphonic acid dimethyl ester (RN 22432-83-3), 2-(methacryloyloxy)methylphosphonic acid diethyl ester (RN 60161-88-8), 2-(methacryloyloxy)methylphosphonic acid dimethyl ester (RN 63411-25-6), 2-(methacryloyloxy)propylphosphonic acid dimethyl ester (RN 252210-28-9), 2-(acryloyloxy)methylphosphonic acid diisopropyl ester (RN 51238-98-3) or 2-(acryloyloxy)ethylphosphonic acid diethyl ester (RN 20903-86-0), and their phosphonic monoacid and diacid alternative forms, such as 2-(methacryloyloxy)ethylphosphonic acid (RN 80730-17-2), 2-(methacryloyloxy)methylphosphonic acid (RN 87243-97-8), 2-(methacryloyloxy)propylphosphonic acid (RN 252210-30-3), 2-(acryloyloxy)propyl-phosphonic acid (RN 254103-47-4) and 2-(acryloyloxy)ethylphosphonic acid,
- vinylphosphonic acid, optionally substituted by cyano, phenyl, ester or acetate groups, vinylidene-phosphonic acid, in the sodium salt.form or the form of its isopropyl ester, or bis(2-chloroethyl)vinylphosphonate.

16. The process as claimed in one of the preceding claims, **characterized in that** the block copolymer employed is obtained as the result of a controlled radical polymerization process preferably using, as control agent, one or more compounds chosen from dithioesters, thioethers-thiones, dithiocarbamates and xanthates, said polymerization being carried out in particular under bulk conditions, in a solvent or in an aqueous emulsion, so as to directly obtain the copolymer in the form of a solution in a solvent, such as an organic solvent, water or a water/alcohol mixture.

17. The process as claimed in one of the preceding claims, **characterized in that** the composition (F) is an aqueous dispersion of at least one polymer.

18. The process as claimed in one of claims 1 to 16, **characterized in that** the composition (F) is an organic solution of at least one polymer.

19. The process as claimed in one of the preceding claims, **characterized in that** the composition (F) is based on polyurethane or on anhydrous mastic or of at least one polymer.

20. The process as claimed in claim 19, **characterized in that**, in stage (B), the aqueous composition (F) is applied in the form of a continuous film to the deposited layer based on the block copolymer.

21. The process as claimed in one of the preceding claims, **characterized in that**, following the application of said composition (F) of stage (C), the surface covered by said composition (F) is subjected to a stage (D) for removal of the solvent phase present in the composition applied.

22. The process as claimed in one of the preceding claims, **characterized in that** the composition (F) is an optionally silicone-comprising mastic composition, paint composition or adhesive composition.

## Patentansprüche

1. Verfahren zur Auftragung einer filmbildenden Zusammensetzung (F) auf eine metallische Oberfläche, das die folgenden Schritte umfasst:
(A) auf besagte Oberfläche wird eine Formulierung, die ein Blockcopolymer enthält, bei dem mindestens ein Block Phosphonatgruppen umfasst, und gegebenenfalls ein Lösungsmittel, wie etwa ein organisches Lösungsmittel, Wasser oder ein Wasser-Alkohol-Gemisch, derart aufgetragen, dass sich auf der besagten Oberfläche eine Ablagerung in Form einer zusammenhängenden Schicht bildet; und
(B) das Lösungsmittel der in Schritt (A) erhaltenen Ablagerung wird zumindest teilweise entfernt; und
(C) auf die so modifizierte Oberfläche, die in Schritt (B) erhalten wird, wird besagte filmbildende Zusammensetzung (F) aufgetragen.

2. Verfahren gemäß dem vorhergehenden Anspruch, **dadurch gekennzeichnet, dass** die metallische Oberfläche eine Oberfläche auf der Basis eines Elements ist, das ausgewählt ist aus der Gruppe der Alkalimetalle oder Erdalkalimetalle, der Übergangsmetalle, Aluminium, Gallium, Indium, Thallium, Silizium, Germanium, Zinn, Blei, Arsen, Antimon, Bismut, Tellur, Polonium oder Astat, sowie deren Oxide oder deren Legierungen.

3. Verfahren gemäß einem der vorhergehenden Ansprüche, **dadurch gekennzeichnet, dass** die metallische Oberfläche eine Oberfläche auf der Basis von Aluminium, Duraluminium, Zink, Blei, Kupfer, Kupferlegierungen, wie etwa Bronze oder Messing, Eisen, Stahl, welcher gegebenenfalls nicht-oxidierbar oder galvanisiert ist, Silber oder vergoldetes Silber (Vermeil) oder deren Gemischen ist.

4. Verfahren gemäß einem der vorhergehenden Ansprüche, **dadurch gekennzeichnet, dass** die in Schritt (A) auf die Oberfläche aufgetragene Formulierung das besagte Blockcopolymer in einem Anteil enthält, der zwischen 0,01 und 50 Massen-% liegt, wobei dieser Anteil als Verhältnis zur Gesamtmasse der Formulierung ausgedrückt ist.

5. Verfahren gemäß Anspruch 4, **dadurch gekennzeichnet, dass** die in Schritt (A) auf die Oberfläche aufgetragene Formulierung das besagte Blockcopolymer in einem Anteil enthält, der zwischen 0,05 und 10 Massen-% liegt, wobei dieser Anteil als Verhältnis zur Gesamtmasse der Formulierung ausgedrückt ist.

6. Verfahren gemäß Anspruch 5, **dadurch gekennzeichnet, dass** die in Schritt (A) auf die Oberfläche aufgetragene Formulierung das besagte Blockcopolymer in einem Anteil enthält, der zwischen 0,1 und 5 Massen-% liegt, wobei dieser Anteil als Verhältnis zur Gesamtmasse der Formulierung ausgedrückt ist.

7. Verfahren gemäß einem der vorhergehenden Ansprüche, **dadurch gekennzeichnet, dass** die Ablagerung des Blockcopolymers in Form einer zusammenhängenden Schicht, die in Schritt B erhalten wird, eine Dicke aufweist, die zwischen 10 nm und 1 µm liegt.

8. Verfahren gemäß Anspruch 8, **dadurch gekennzeichnet, dass** die Ablagerung des Blockcopolymers in Form einer zusammenhängenden Schicht, die in Schritt B erhalten wird, eine Dicke aufweist, die zwischen 40 nm und 600 nm liegt.

9. Verfahren gemäß Anspruch 7 oder 8, **dadurch gekennzeichnet, dass** die Ablagerung des Blockcopolymers in Form einer zusammenhängenden Schicht, die in Schritt B erhalten wird, eine Dicke aufweist, die zwischen 50 nm und 500 nm liegt.

10. Verfahren gemäß einem der vorhergehenden Ansprüche, **dadurch gekennzeichnet, dass** der Phosphonatgruppen umfassende Block ein Homopolymer auf der Basis von Monomeren ist, welche Phosphatgruppen umfassen.

11. Verfahren gemäß einem der Ansprüche 1 bis 9, **dadurch gekennzeichnet, dass** der Phosphonatgruppen umfassende Block ein statistisches Polymer auf der Basis von mindestens einem Monomer ist, welches diese Phosphonatgruppen umfasst, wobei die Menge der besagten Monomere zwischen 0,1 und 100 Gew.-% besagter Monomere im Verhältnis zum Gesamtgewicht des Blocks liegt.

12. Verfahren gemäß Anspruch 11, **dadurch gekennzeichnet, dass** die Menge der besagten Monomere zwischen 0,5 Gew.-% und 50 Gew.-% besagter Monomere im Verhältnis zum Gesamtgewicht des Blocks liegt.

13. Verfahren gemäß einem der Ansprüche 11 oder 12, **dadurch gekennzeichnet, dass** die Menge der besagten Monomere zwischen 2 Gew.-% und 20 Gew.-% besagter Monomere im Verhältnis zum Gesamtgewicht des Blocks liegt.

14. Verfahren gemäß einem der Ansprüche 10 bis 13, **dadurch gekennzeichnet, dass** der Massenanteil des Ankerblocks, der Phosphonatgruppen enthält, im Verhältnis zum Gesamtgewicht des Blockcopolymers der vorliegenden Erfindung zwischen 90:10 und 10:90 variiert.

15. Verfahren gemäß einem der Ansprüche 10 bis 14, **dadurch gekennzeichnet, dass** das Phosphonatgruppen umfassende Monomer ausgewählt ist aus:
- N-Methacrylamidomethylphosphonsäureester-Derivaten, insbesondere n-Propylester (RN 31857-11-1), Methylester (RN-31857-12-2), Ethylester (RN 31857-13-3), n-Butylester (RN 31857-14-4), Isopropylester (RN 51239-00-0), sowie deren Monophosphonsäure- und Diphosphonsäure-Derivate, wie etwa N-Methacrylamidomethyldiphosphonsäure (RN 109421-20-7),
- N-Methacrylamidoethylphosphonsäureester-Derivaten, wie etwa N-Methacrylamidoethylphosphonsäure-dimethylester (RN 266356-40-5), N-Methacrylamidoethyl-phosphonsäure-di(2-butyl-3,3-dimethyl)-ester (RN 266356-45-0), sowie deren Monophosphonsäure- und Diphosphonsäure-Derivate, wie etwa N-Methacrylamidoethyldiphosphonsäure (RN 80730-17-2),
- N-Acrylamidomethylphosphonsäureester-Derivaten, wie etwa N-Acrylamidomethylphosphonsäure-dimethylester (RN 24610-95-5), N-Acrylamidomethylphosphonsäure-diethylester (RN 24610-96-6), Bis(2-chlorpropyl)-N-acrylamidomethyl-phosphonat (RN 50283-36-8), sowie deren Monophosphonsäure- und Diphosphonsäure-Derivate, wie etwa N-Acrylamidomethylphosphonsäure (RN 151752-38-4),
- Vinylbenzylphosponat-dialkylester-Derivaten, insbesondere Di(n-propyl)-Derivate (RN 60181-26-2), Di(isopropyl)-Derivate (RN 159358-34-6), Diethyl-Derivate (RN 726-61-4), Dimethyl-Derivate (RN 266356-24-5), Di(2-butyl-3,3-dimethyl)-Derivate (RN 266356-29-0) und Di(t-butyl)-ester-Derivate (RN 159358-33-5), sowie deren Monophosphonsäure- und Diphosphonsäure-Varianten, wie etwa Vinylbenzyldiphosphonsäure (RN 53459-43-1),
- Diethyl-2-(4-vinylphenyl)-ethanphosphonat (RN 61737-88-0),
- Dialkylphosphonoalkylacrylat- und -methacrylat-Derivate, wie etwa 2-(Acryloyloxy)-ethylphosphonsäure-dimethylester (RN 54731-78-1) und 2-(Methacryloyloxy)-ethylphosphonsäure-dimethylester (RN 22432-83-3), 2-(Methacryloyloxy)-methylphosphonsäure-diethylester (RN 60161-88-8), 2-(Methacryloyloxy)-methylphosphonsäure-dimethylester (RN 63411-25-6), 2-(Methacryloyloxy)-propylphosphonsäure-dimethylester (RN 252210-28-9), 2-(Acryloyloxy)-methylphosphonsäure-diisopropylester (RN 51238-98-3), 2-(Acryloyloxy)-ethylphosphonsäure-diethylester (RN 20903-86-0), sowie deren Monophosphonsäure- und Diphosphonsäure-Varianten, wie etwa 2-(Methacryloyloxy)-ethylphosphonsäure (RN 80730-17-2), 2-(Methacryloyloxy)-methylphosphonsäure (RN 87243-97-8), 2-(Methacryloyloxy)-propylphosphonsäure (RN 252210-30-3), 2-(Acryloyloxy)-propylphosphonsäure (RN 254103-47-4) und 2-(Acryloyloxy)-ethylphosphonsäure,
- Vinylphosphonsäure, gegebenenfalls substituiert mit Cyano-, Phenyl-, Ester- oder Acetatgruppen, Vinylidenphosphonsäure, in Form des Natriumsalzes oder ihres Isopropylesters, Bis(2-chlorethyl)-vinylphosphonat.

16. Verfahren gemäß einem der vorhergehenden Ansprüche, **dadurch gekennzeichnet, dass** das verwendete Blockcopolymer aus dem Produkt eines kontrollierten radikalischen Polymerisationsverfahrens erhalten wird, das vorzugsweise als Kontrollmittel eine oder mehrere Verbindungen einsetzt, die ausgewählt sind aus Dithioestern, Thioetherthionen, Dithiocarbamaten und Xanthogenaten, wobei die besagte Polymerisation insbesondere als Bulk-Polymerisation, in Lösungsmittel oder in wässriger Emulsion derart durchgeführt wird, dass das Copolymer direkt in Form einer Lösung in einem Lösungsmittel, wie etwa einem organischen Lösungsmittel, Wasser oder einem Wasser-Alkohol-Gemisch, erhalten wird.

17. Verfahren gemäß einem der vorhergehenden Ansprüche, **dadurch gekennzeichnet, dass** die Zusammensetzung (F) eine wässrige Dispersion von mindestens einem Polymer ist.

18. Verfahren gemäß einem der Ansprüche 1 bis 16, **dadurch gekennzeichnet, dass** die Zusammensetzung (F) eine organische Lösung von mindestens einem Polymer ist.

19. Verfahren gemäß einem der vorhergehenden Ansprüche, **dadurch gekennzeichnet, dass** die Zusammensetzung (F) auf der Basis von Polyurethan oder wasserfreiem Mastix von mindestens einem Polymer ist.

20. Verfahren gemäß Anspruch 19, **dadurch gekennzeichnet, dass** in Schritt (B) die wässrige Zusammensetzung (F) in Form eines zusammenhängenden Films auf die Ablagerung auf der Basis des Blockcopolymers aufgetragen wird.

21. Verfahren gemäß einem der vorhergehenden Ansprüche, **dadurch gekennzeichnet, dass** im Anschluss an die Auftragung der besagten Zusammensetzung (F) in Schritt (C) die mit besagter Zusammensetzung (F) bedeckte Oberfläche einem Schritt (D) unterzogen wird, in dem die Lösungsmittelphase, die inmitten der aufgetragenen Zusammensetzung vorliegt, entfernt wird.

22. Verfahren gemäß einem der vorhergehenden Ansprüche, **dadurch gekennzeichnet, dass** die Zusammensetzung (F) eine Klebezusammensetzung, eine Anstrichzusammensetzung oder eine silikonisierte oder nicht-silikonisierte Mastix-Zusammensetzung ist.
